# EUROPEAN PATENT APPLICATION

(11) **EP 2 196 480 A1**
(43) Date of publication of application: **16.06.2010**
(21) Application number: 08021757.3
(22) Date of filing: 15.12.2008
(51) Int. Cl.: C08F 4/02, C08F 10/00, C08F 4/6592

(54) **Supported catalyst**

(71) Applicant: Max-Planck-Gesellschaft zur Förderung der Wissenschaften e.V., 80539 München (DE)
(72) Inventor: Diesing, Till, 35327 Ulrichstein-Helpershain (DE); Klapper, Markus, Dr., 55128 Mainz (DE); Müllen, Klaus, Prof., 50939 Köln (DE); Fink, Gerhard, Prof. Dr., 45470 Mülheim/ Ruhr (DE)
(74) Representative: Dey, Michael

(57) **Abstract**

The present invention relates to particles comprising supported catalysts in a spatially resolved form.

## Description

The present invention relates to particles comprising supported catalysts in a spatially resolved form.

The catalysts employed in the production of polymers have an essential effect on the properties of the polymers formed such as mechanical properties or rheological properties. In particular, by using supported (post-) metallocene catalysts, for example, polymers having a narrow molecular weight distribution (MWD) can be obtained which exhibit great strength. Other catalysts, e.g. Ziegler-Natta catalysts, however, often yield softer polymers.

In order to optimize both mechanical and rheological properties it is necessary to control the parameters of the polymer such as MW and MWD via the catalyst(s) employed.

In many applications, a combination of properties is desirable. This can be achieved, for example, by using mixed catalysts, whereby either particles statistically supporting two or more catalysts or a mixture of catalyst particles carrying different catalysts can be employed (cf. Cho et al., J. Mol. Cat. A: Chem. 159 (2000) 203-213; Park et al., J. Mol. Cat. A: Chem. 255 (2006) 69-73; US 2005/0003950 A1). By these procedures, random polymer mixtures are obtained.

However, polymer particles having a defined structure are favorable in many applications, e.g. in the production of films or composite materials. A core-shell polymer structure can be obtained by cascade reaction in two or more reactors, wherein different supported catalysts are present in each reactor (cf., for example, L. Böhm, Angew. Chem. Int. Ed. 2003, 42, 5010-5030; Galli et al., Prog. Polym. Sci. 26 (2001) 1287-1336). The procedures described therein, however, are laborious and, for example, require transfer of process materials into another reactor or use of different monomers. Further, carry-over of the various catalysts cannot be ruled out in these methods.

Therefore, it was an object of the invention to provide systems with a spatially resolved core-shell polymer structure and, in particular, improved and simplified alternatives for preparing such polymer structures.

This object is achieved by the inventive catalyst particles which can be used for the production of structured polymer particles.

The invention relates to a catalyst particle comprising (i) a first area comprising a first carrier material and a first catalyst or catalyst mixture, and (ii) a second area comprising a second carrier material and a second catalyst or catalyst mixture.

The inventors have been successful in fixing catalysts on a support in spatially resolved form. The term "spatially resolved" means that the catalysts are in a defined area of the support material and not statistically distributed. Thus, the invention relates to a spatially resolved, non-statistical distribution of supported catalysts on particles.

The inventive catalyst particles comprise at least two distinct areas. However, it is also possible to provide catalyst particles having several distinct areas, e.g. at least three, at least five or at least ten distinct areas.

It is essential for the invention that, in a given area, only or very predominantly the predetermined catalyst(s) provided therein is/are contained and no mixing, in particular, no statistical distribution of the various catalysts in the respective areas takes place.

The respective areas preferably have a dimension of at least 5 nm, preferably of at least 10 nm, more preferably of at least 50 nm. Dimension means the characteristic value of an area, e.g. the diameter in case of a spherical area, the layer thickness in case of a layered area, etc.

In the particles of the invention, the respective provided catalyst is present almost only in the intended area, especially in an amount of > 90 mole%, more preferably ≥ 95 mole%, even more preferred ≥ 98 mole%, related to total catalyst species present in that area.

According to a preferred embodiment of the invention, the catalyst particle has a core-shell structure. Thereby, the core constitutes the first area and the shell constitutes the second area. Spatial resolution thereby can be achieved by applying a second carrier or matrix material onto an existing catalyst particle and immobilizing the second carrier material.

Preferably, the catalysts contained in the inventive catalyst particle are supported catalysts. Preferably, the first and second catalyst are supported within the first and second carrier material in a spatially resolved form. That means that the space between the catalyst domains is significantly bigger than the average size distance of two statistically distributed catalyst units.

According to the invention it is possible that the first and second carrier material are made from the same material. In that case it is preferred that the carrier materials differ in their structure, e.g. in the particle size of the carrier material. Preferably, the first and second carrier material are provided from different materials. The first and second carrier material can be selected from inorganic and/or organic materials, in particular, SiO₂, MgCl₂, polystyrene. An overview over typical support materials is given at G. G. Hlatky, Chem. Rev. 2000, 100, 1347-1376 and in J. R. Severn, J. C. Chadwick, R. Duchateau and N. Friederichs, Chem. Rev. 2005, 105, 4073-4147.

In a preferred embodiment, the first carrier material is selected from inorganic materials and the second carrier material is selected from organic materials. The use of SiO₂ material as core material and polystyrene particles as second carrier material has turned out to be an especially suitable combination.

In a preferred embodiment, the first carrier material consists of single particles having a diameter from at least 0.5 µm, preferably 1 µm, in particular, 5 µm, more preferably 10 µm, especially 30 µm and most preferably 40 µm and up to 1000 µm, preferably 500 µm, in particular, 200 µm, more preferably 100 µm and most preferably 80 µm. Said first carrier material being the core material is then preferably covered completely by the second carrier material which is comprised of nanoparticles having a diameter from 10 to 500 nm, preferably from 40 to 200 nm, in particular, from 30 to 100 nm. Thereby, the entire layer of the second carrier material preferably has a thickness of 30 nm to 5 µm, preferably 80 nm to 2 µm.

By using single particles as the first carrier materials, the structure of the catalyst particle is basically preserved during the polymerization to be carried out and is reflected by the polymer particle formed.

The inventive catalyst particles contain at least two different catalysts which are applied in spatially resolved form. The catalyst basically can be selected from any materials suitable for catalysis, in particular, for the catalysis of polymerization reactions. Preferably, the catalyst systems are olefin catalysts, in particular, (post-)metallocene or Ziegler-Natta catalysts. In a preferred embodiment, the first catalyst is a (post-)metallocene catalyst and the second catalyst a second (post-)metallocene catalyst as well. However, it is also possible to use two different Ziegler-Natta catalysts and both a Ziegler-Natta and a (post-)metallocene catalyst. In an especially preferred embodiment, the first catalyst catalyzes the formation of a hard polymer and/or the second catalyst catalyzes the formation of a soft polymer.

Further, methylalumoxane (MAO) is preferably used as co-catalyst.

In an especially preferred embodiment of the invention, the catalyst particle is a spherical particle.

Most preferably, a single particle of SiO₂, in particular, having a diameter of 5 to 200 µm, preferably from 40 to 100 µm, is used as a first carrier material. The use of SiO₂ as core matrix offers the advantage that uniform break-up takes place upon polymerization and the structure itself is preserved. As the carrier material for the second area or shell, in particular, polystyrene is preferred, since it has good application properties. Thereby, polystyrene layer is preferably formed from polystyrene nanoparticles having a diameter of 10 to 200 nm, in particular, 40 to 100 nm, whereby the entire layer preferably has a thickness of 30 nm to 5 µm.

In the preferred structure of a spherical catalyst particle, the core thus consists of a single particle, whereas the shell consists of many small particles. The use of a single core particle enables uniform polymerization while maintaining the structure during the fragmentation process. Further, the core particle preferably is porous in order that, first, the catalyst and later on, during polymerization, the monomer can diffuse into it. The shell preferably consists of many small particles in order to achieve ordered fragmentation. Upon using a shell of an organic polymer alone, the fragmentation process is adjustable, mostly it is faster than with inorganic carriers. This may lead to an airy product and may low bulk density of the polymer spheres are obtained.

The invention further relates to a process for producing a catalyst particle as described herein, comprising the steps: (a) providing a first carrier material, (b) applying a first catalyst to the first carrier material, (c) adding a second carrier material, and (d) applying a second catalyst to the second carrier material.

According to the invention, steps (a) to (d) can be carried out in any order. Preferably, however, steps (a) to (d) are carried out one after the other. Thereby, the first carrier material, e.g. a core particle, is provided first. Then, a first catalyst is applied onto said first carrier material, as a result of which a first catalyst particle having the first catalyst supported on the first carrier material is formed. In a further step, a second matrix material, e.g. a shell material, is then applied onto the first catalyst particle. Finally, a second catalyst is applied onto the second carrier material. Favorably, the application conditions are adjusted to the respective catalysts and carrier materials.

However, it is also possible to provide a first carrier material including a first catalyst and adding thereto a second carrier material already including a second catalyst.

Basically, it is also possible to produce the inventive catalyst particles, for example, by charging a first catalyst particle with a second carrier material already containing catalyst.

The catalyst particles of the invention are especially suitable for the production of polymer particles. The invention therefore also relates to a process for the production of polymer particles, wherein at least one monomer species is contacted with at least one catalyst particle as described herein.

The use of the inventive structured catalyst particles, in particular, leads to the formation of structured polymer particles, wherein, for example, different polymers are present in different areas of the polymer particle. This enables the formation of polymer particles which are of interest for most various applications. For example, polymer particles can be formed which have a hard core formed by polymerization of monomers catalyzed by a first catalyst promoting the formation of hard polymer and a soft shell formed from monomers by catalysis with a second catalyst promoting the formation of soft polymers. Such structured polymer particles, in particular, core shell particles can combine desired properties, e.g. mechanical strength in the core and softness for processability in the shell. Especially composite materials or films can be formed therefrom.

Due to the at least two supported catalysts in a spatially resolved form which are different from each other the inventive catalyst particles allow to carry out reactions, in particular, polymerization reactions simultaneously or successively on a single catalyst particle. Stepwise build-up or transfer of particles into different reaction areas or different reactors as required in the prior art is thus no longer necessary. Rather, a desired two- or three-dimensional structure of the polymer particle can be produced, starting out from the catalyst particle. This is accomplished by a predetermined particle structure prejudiced by catalyst distribution. According to the invention the reaction, thus, can be carried out in a single reactor.

Especially preferably, polyolefins are formed, so the at least one monomer species is selected from olefins, in particular, ethylene and/or propylene. According to the invention it is possible to form a structured polymer particle by means of different catalysts, starting out from a single monomer species. The different polymers, which are different especially with regard to their properties, are thereby formed on the respective different first and second catalysts, starting out from the same monomer. However, it is also possible to react two or more different monomer species with the inventive catalyst particles. The polymer particles formed according to the invention, in particular, have macroscopic areas from different polymers.

The invention is further illustrated by the appended Figures and the Examples given below.

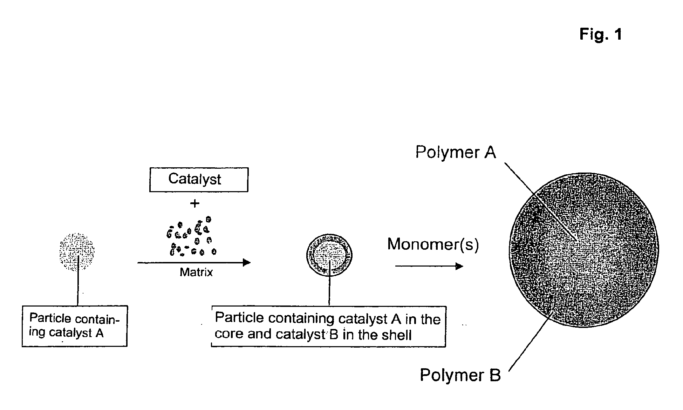

Fig. 1 schematically shows the production of the inventive catalyst particles as well as their use in the polymerization of a polymer particle. Starting out from a first catalyst particle comprising a first carrier material and catalyst A, this particle is coated with a second carrier material and a second catalyst B, forming an inventive catalyst particle having catalyst A within the core and catalyst B within the shell. Applying monomer(s) to this catalyst particle results in the formation of a structured polymer particle comprising polymer A in the core and polymer B in the shell.

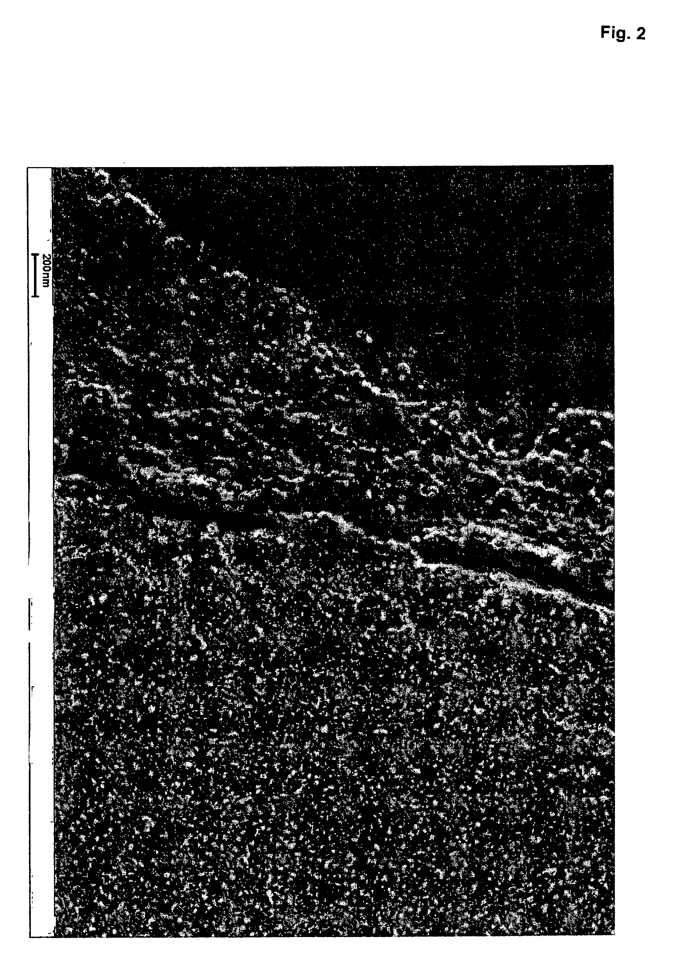

Fig. 2 shows a cross-section through an inventive catalyst particle (named K81) clearly showing a polystyrene shell (top) covering the silica core (bottom). The polystyrene nanoparticles can be distinguished via their spherical shape and typical size range.

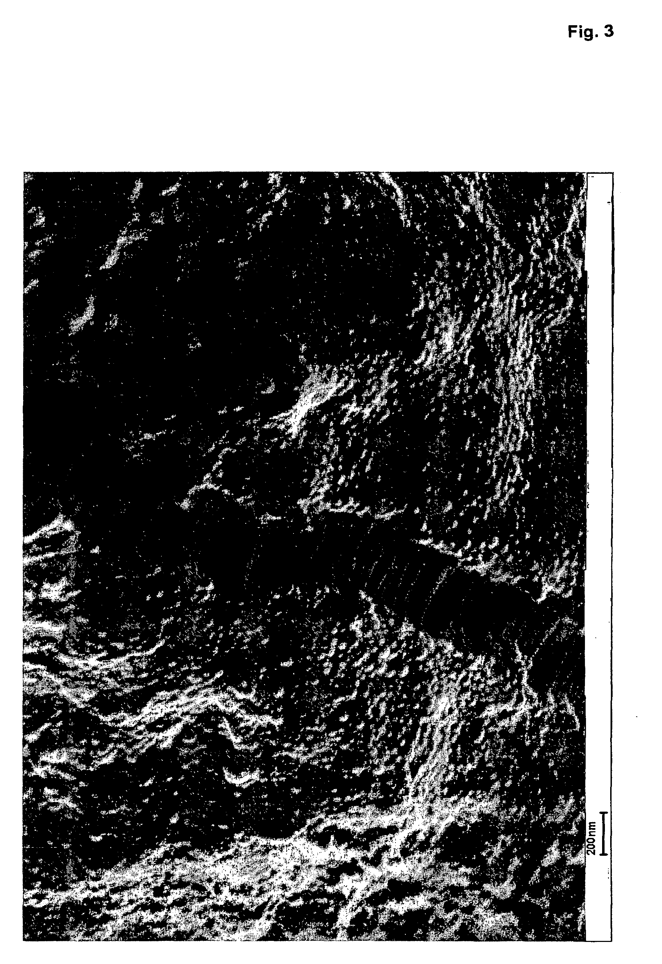

Fig. 3 shows a core-shell system having only a catalyst, namely a (post)metallocene catalyst, within the shell which has been polymerized for 30 sec. Breaking up of the shell carrier material and formation of polymer threads can be clearly observed.

Fig. 4 and 5 show a core-shell system having a catalyst, namely a (post)metallocene catalyst, within the shell. As second carrier material, fluorescent labelled polystyrene particles were used.

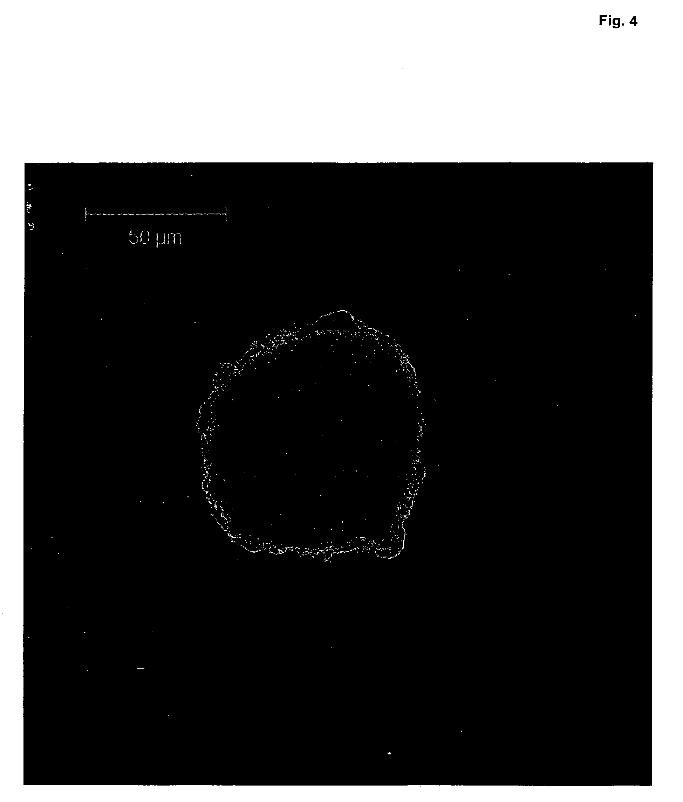

Fig. 4 shows the catalyst particle before performing polymerization, showing that no mixing between core and shell matrix materials takes place. Further, Fig. 4 shows complete coating of the core by the second carrier material, indicated by the fluorescent corona.

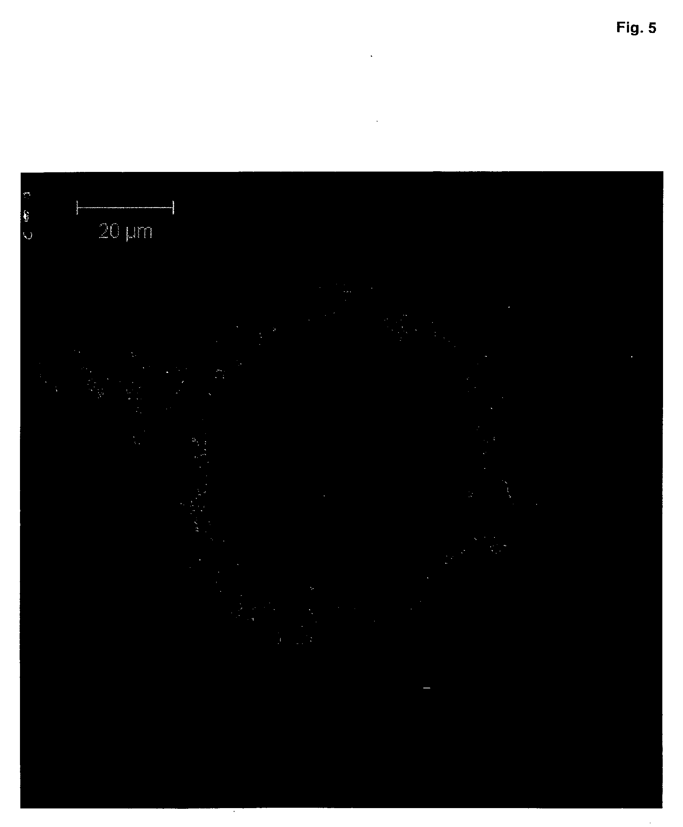

Fig. 5 shows the same particle after polymerization of ethylene. Due to the formation of polyethylene within the shell the carrier material is cracked.

### Example 1

### Synthesis of core-shell particle:

500 mg SiO₂ (Davicat SI 1700) were dehydroxylated under vacuum for 3 h at 280 °C, suspended in 10 ml toluene and mixed with 3.0 ml of a 1.5 M methylalumoxane solution. After drying the silica, the powder was resuspended in a (post-)metallocene catalyst solution consisting of 6.7 µmole bis[N-(5-methoxy-3-t-butylsalicylidene)-2-methylcyclohexylaminato] zirconium (IV)dichloride in 15 ml toluene. After stirring overnight (15 h) at room temperature, the supernatant solution was decanted, the product was washed twice with approximately 10 ml toluene and dried, yielding the first catalyst particle.

### Solution 1:

120 mg PEO-PS (Polyethyleneoxide-Polystyrene) particles (for synthesis see literature; Example PEO-7 of J. of Pol. Sci.: A: Pol. Chem., vol. 44, 3103-3113, 2006, Müllen et al.) were suspended in 10 ml toluene.

### Solution 2:

3.3 µmole rac-(dimethylsilyl-bis(2-methylbenzindenyl)-zirconium dichloride were dissolved in 5 ml toluene containing 0.4 ml 1.5 M methylalumoxane solution.

The first catalyst particle was provided in 15 ml toluene and stirred. Thereafter, solution 1 was added dropwise for 2 h. Solution 2 was added dropwise 20 min later for 1.5 h (termination of addition 10 min before termination of addition of solution 1).

The product (named K81) was dried. Elemental analysis: 11.5% C and 2.4% H.

The entire synthesis was carried out under inert conditions (Schlenk technique, Glove Box).

## Claims

1. Catalyst particle comprising
(i) a first area comprising a first carrier material and a first catalyst or catalyst mixture, and
(ii) a second area comprising a second carrier material and a second catalyst or catalyst mixture.

2. The catalyst particle of claim 1 having a core shell structure, wherein the core constitutes the first area and the shell constitutes the second area.

3. The catalyst particle of claim 1 or 2, wherein the first and second catayst are supported within the first and second carrier material in non-statistical, spatially resolved form.

4. The catalyst particle according to any of claims 1 to 3, wherein the first and second carrier material are different or similar materials.

5. The catalyst particle of any of claims 1 to 4, wherein the first and second catalyst are different catalysts.

6. The catalyst particle of any of the preceding claims, wherein the first and second carrier material are layered.

7. The catalyst particle of any of the preceding claims, wherein the first and second carrier material are selected from inorganic and/or organic materials, in particular, SiO₂ and polystyrene.

8. The catalyst particle of any of the preceding claims, wherein the first carrier material consists of single particles having a diameter from 1 to 1000 µm, preferably between 30 and 100 µm.

9. The catalyst particle according to any of the preceding claims, wherein the second carrier material is comprised of nanoparticles having a diameter from 10 to 200 nm, preferably between 30 and 100 nm.

10. The catalyst particle according to any of the preceding claims, which is a spherical particle.

11. A process for producing a catalyst particle according to any of the preceding claims, comprising the steps of:
(a) providing a first carrier material,
(b) applying a first catalyst to the first carrier material,
(c) adding a second carrier material, and
(d) applying a second catalyst to the second carrier material.

12. A process for the production of polymer particles, wherein at least one monomer species is contacted with at least one catalyst particle according to any of claims 1 to 10.

13. The process according to claim 12, wherein the at least one monomer species is selected from olefins, in particular, ethylene and/or propylene.

14. The process according to any of claims 12 or 13, wherein one single monomer species is contacted with the catalyst particles.

15. The process of any of claims 12 or 13, wherein two or more different monomer species are contacted with the catalyst particles.

16. The process of any of claims 12 to 15, being performed in a single reactor.
